# FASCICULE DE BREVET EUROPEEN

(11) **EP 2 479 121 B1**
(45) Date de publication et mention de la délivrance du brevet: **23.04.2014**
(21) Numéro de dépôt: 12151872.4
(22) Date de dépôt: 20.01.2012
(51) Int. Cl.: B65D 85/52, B29C 45/16, A01G 9/02

(54) **Contenant perfectionné obtenu par moulage bi-injection.**
Perfektionierter Behälter, der durch Bi-Injektionsguss erzeugt wurde
Improved container obtained by bi-injection moulding.

(30) Priorité: 24.01.2011 FR 1150548
(43) Date de publication de la demande: 25.07.2012
(73) Titulaire: Cep Tubes, 63550 Saint Remy Sur Durolle (FR)
(72) Inventeur: Dambricourt, Géry, 63300 ESCOUTOUX (FR)
(74) Mandataire: Novagraaf Technologies

(56) Documents cités:
- WO-A2-2005/068152
- DE-A1- 4 224 171
- DE-A1- 19 711 887
- US-A1- 2008 022 589

## Description

L'invention concerne, de façon générale, les techniques de moulage.

Plus précisément, l'invention concerne un contenant moulé, selon le préambule de la revendication 1, par exemple utilisable comme pot d'horticulture, comprenant un fond s'étendant dans un plan principal et une paroi dressée de forme évasée se raccordant au fond et s'étendant, suivant une direction perpendiculaire au plan principal, jusqu'à un bord continu séparé du fond par une distance maximale, la paroi au moins étant réalisée par moulage dans un premier polymère thermoplastique le contenant moulé comprenant en outre un rebord s'étendant radialement autour du bord, ce rebord se raccordant à la paroi à plus grande proximité du bord que du fond et s'élevant jusqu'à atteindre, par rapport au fond, une hauteur supérieure à la distance maximale.

Les contenants de ce type sont bien connus de l'homme du métier et sont couramment utilisés en raison de leur fabrication aisée et de leur coût de revient corrélativement faible.

Par exemple, la demande de brevet US 2008/0022589 divulgue un pot de fleur bi-couleur ressemblant à de l'émail. Selon ce document, le pot est réalisé par un procédé de moulage bi-injection mettant en oeuvre une seule opération d'extrusion.

En dépit de leurs avantages, les contenants connus de ce type présentent évidemment des qualités esthétiques et ornementales inférieures à celles des poteries fabriquées à la main.

Bien que ces dernières soient en effet très difficiles à imiter dans le cadre d'une fabrication en grande série, l'invention a pour but de proposer une technique permettant au moins d'enrichir les qualités décoratives des contenants moulés en polymère.

A cette fin, le contenant de l'invention, par ailleurs conforme à la définition générique qu'en donne le préambule ci-dessus, est essentiellement tel que le rebord est réalisé dans un deuxième polymère thermoplastique se distinguant du premier polymère au moins par sa couleur, le contenant moulé étant réalisé par un moulage bi-injection.

Il est en outre souhaitable que la force de cohésion entre le rebord et la paroi soit suffisamment importante pour permettre à un utilisateur de soulever le contenant, avec son contenu, en tenant ce contenant par le rebord sans risquer une rupture de la liaison entre le rebord et la paroi en dépit du caractère nécessairement localisé de cette liaison.

Pour ce faire, la paroi et le rebord présentent une épaisseur moyenne égale, à plus ou moins 25% près, à 0,5+ (0,065.V) millimètres, où V est le volume du contenant exprimé en litres.

En outre, il est judicieux de prévoir que le rebord présente une face externe se raccordant à la paroi en formant avec cette paroi un angle au plus égal à 150 degrés, et que le deuxième polymère pénètre dans le premier polymère dans une zone de raccordement dans laquelle le rebord se raccorde à la paroi.

Une telle structure peut être obtenue en réalisant le contenant par un moulage bi-injection par rétraction.

Il est alors possible de faire en sorte que, dans la zone de raccordement, le deuxième polymère présente une épaisseur égale, à plus ou moins 10% près, à l'épaisseur moyenne du rebord.

Par ailleurs, il est souhaitable que le rebord présente une face interne se raccordant à la paroi en formant une couche recouvrant la paroi sur une partie au moins de cette paroi comprise entre la zone de raccordement et le bord de la paroi.

Dans une autre solution, le rebord se raccorde à la paroi le long du bord.

En outre, chacun des premier et deuxième polymères est de préférence teinté dans la masse, et l'un au moins des premier et deuxième polymères contient du polypropylène en tant que constituant d'un mélange ou en tant que copolymère.

Dans le mode de réalisation préféré de l'invention, le fond et la paroi sont réalisés d'une seule pièce par moulage dans le premier polymère thermoplastique.

D'autres caractéristiques et avantages de l'invention ressortiront clairement de la description qui en est faite ci-après, à titre indicatif et nullement limitatif, en référence aux dessins annexés, dans lesquels :

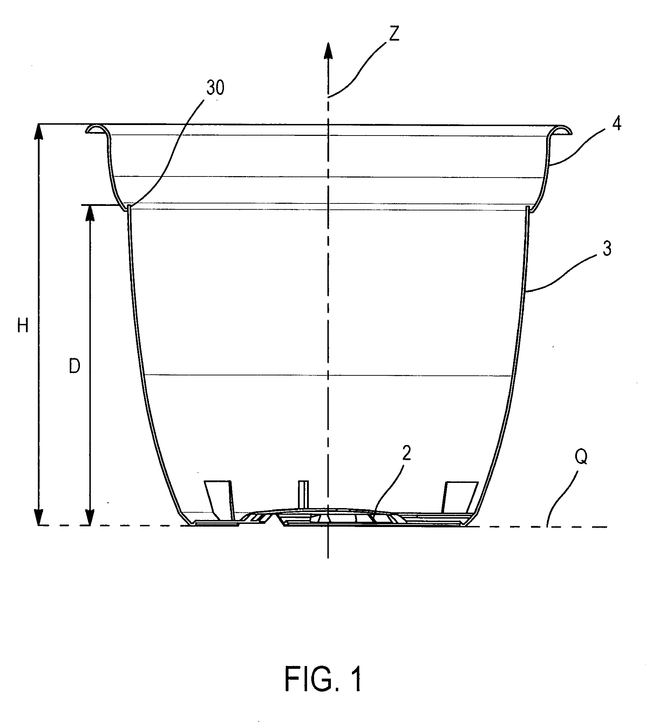

- la figure 1 est une vue en coupe axiale d'un contenant conforme à un mode de réalisation de l'invention;

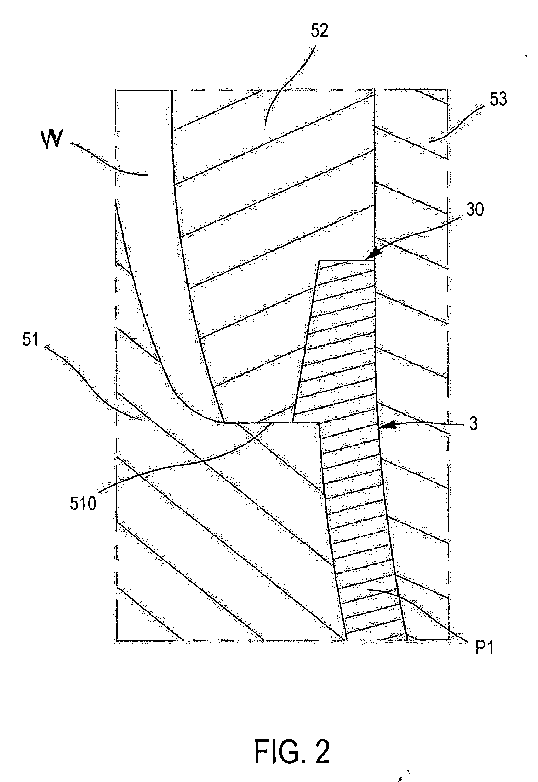

- la figure 2 est une vue en coupe axiale à échelle agrandie d'une partie d'un contenant conforme à un premier mode de réalisation de l'invention illustré après injection du premier polymère dans un moule à rétractation, la partie représentée étant constituée par la partie supérieure de la paroi;

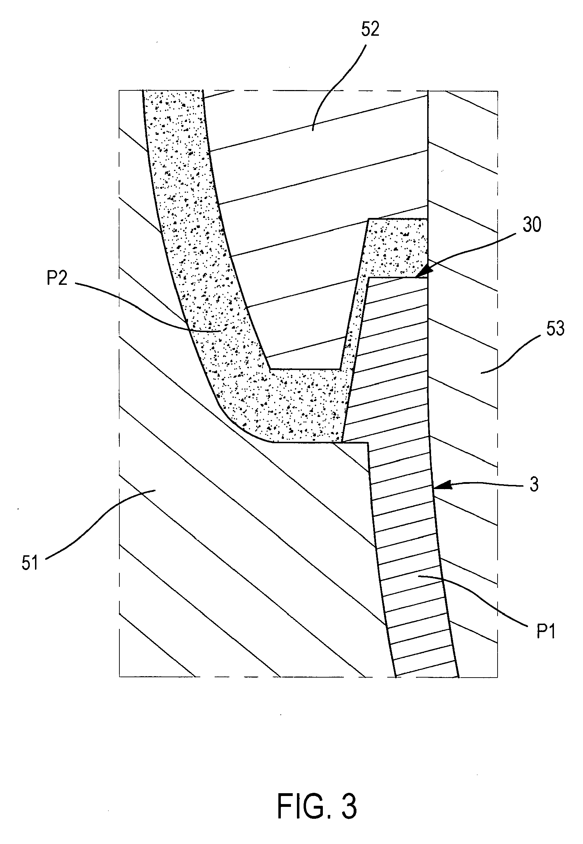

- la figure 3 est une vue en coupe axiale à échelle agrandie d'une partie du contenant conforme au mode de réalisation de la figure 2, illustré après injection du deuxième polymère dans le moule à rétraction de la figure 2, la partie représentée étant constituée par la partie supérieure de la paroi, par le rebord, et par la liaison entre le rebord et la paroi, tels que ces éléments devraient se présenter en théorie si le deuxième polymère était injecté à vitesse réduite après refroidissement et solidification définitive du premier polymère -

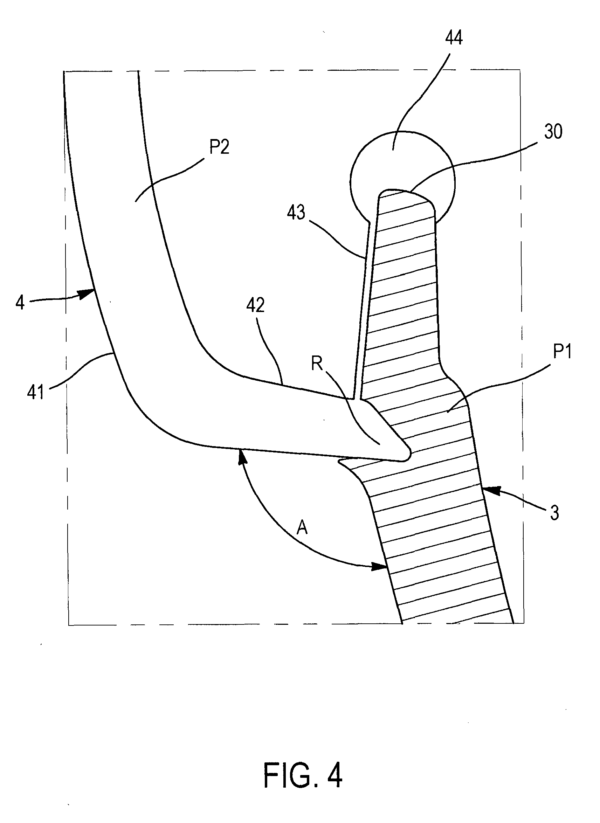

- la figure 4 est une vue en coupe axiale à échelle agrandie d'une partie du contenant conforme au mode de réalisation des figures 2 et 3, illustré après fabrication dans le moule à rétraction des figures 2 et 3, la partie représentée étant constituée par la partie supérieure de la paroi, par le rebord, et par la liaison entre le rebord et la paroi, tels que ces éléments se présentent en réalité,

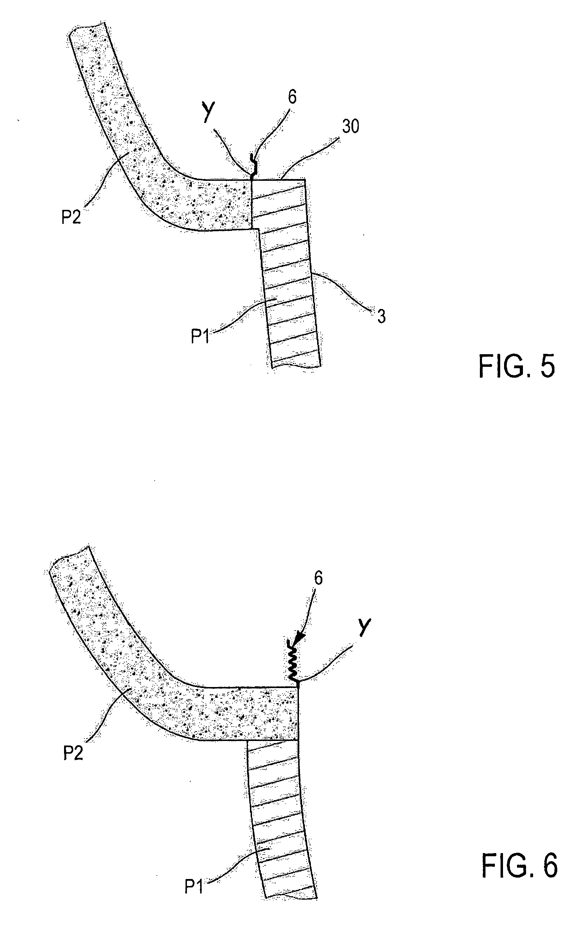

- les figures 5 et 6 sont des vues en coupe axiale d'un deuxième et d'un troisième modes de réalisation de l'invention, tels que la paroi, le rebord et la liaison entre le rebord et la paroi devraient se présenter en théorie si le deuxième polymère était injecté après solidification définitive du premier polymère.

Comme annoncé précédemment, l'invention concerne notamment un contenant 1 moulé, par exemple conçu pour constituer un pot d'horticulture.

Comme le montre la figure 1, un tel contenant 1 présente essentiellement un fond 2 s'étendant dans un plan principal Q, et une paroi dressée 3 de forme évasée se raccordant au fond 2.

La paroi 3 s'étend, suivant une direction Z perpendiculaire au plan principal Q, jusqu'à un bord continu 30 séparé du fond 2 par une distance maximale D.

En général, le bord 30 s'étend dans un plan parallèle au plan Q, de sorte que tous les points du bord continu 30 sont à la même distance D du fond 2.

Le fond 2 et la paroi 3 sont de préférence réalisés d'une seule pièce par moulage dans un premier polymère thermoplastique P1 par exemple teinté dans la masse et contenant du polypropylène en tant que constituant d'un mélange ou en tant que copolymère.

Le contenant de l'invention comprend en outre un rebord 4 qui s'étend radialement autour du bord 30 et qui se raccorde à la paroi 3 à plus grande proximité du bord 30 que du fond 2, typiquement à quelques millimètres du bord 30.

D'autre part, ce rebord 4 s'élève jusqu'à atteindre, par rapport au fond 2, une hauteur H supérieure à la distance maximale D.

Typiquement, la hauteur H est supérieure de quelques centimètres à la distance maximale D, de sorte que le bord 30 de la paroi 3 est caché, par le rebord 4, à la vue de tout observateur examinant le contenant 1 de l'extérieur en plaçant son oeil dans un plan transversal à la normale au fond 2 et situé à mi-hauteur de la paroi 3.

Par ailleurs, le rebord 4 est réalisé dans un deuxième polymère thermoplastique P2 qui se distingue du premier polymère au moins par sa couleur, ce deuxième polymère pouvant en revanche être lui aussi teinté dans la masse et être soit identique au premier polymère, soit au moins appartenir à la même famille chimique de polymères.

En particulier, le deuxième polymère P2 contient de préférence du polypropylène en tant que constituant d'un mélange ou en tant que copolymère.

L'expression teinté dans la masse signifie que le polymère a été coloré avant injection dans le moule, quelque soit le procédé utilisé pour obtenir la coloration recherchée, cette définition s'appliquant à la fois au polymère 1 et au polymère 2.

L'épaisseur moyenne de la paroi 3 et du rebord 4 peut adéquatement être comprise entre 0,45 et 1,5 millimètres pour des contenants compris entre 0,5 et 15 litres, et comprise entre 1,2 et 2,5 millimètres pour des contenants compris entre 15 et 30 litres.

De manière plus précise, la paroi 3 et le rebord 4 présentent une épaisseur moyenne égale, à plus ou moins 25% près, à 0,5+ (0,065.V) millimètres, où V est le volume du contenant exprimé en litres.

La variation de plus ou moins 25 % correspond à la rigidité recherchée du contenant, sans relation avec les contraintes d'industrialisation de ce contenant ou avec la qualité de la soudure entre la paroi et le rebord.

Comme le montrent les figures 2 et 3, le contenant de l'invention est très avantageusement réalisé par un moulage bi-injection par rétraction.

Il existe en effet deux grandes familles de procédés de moulage bi-injection, à savoir le moulage par transfert et le moulage par rétraction.

Dans le procédé de moulage bi-injection par transfert, la première injection est réalisée dans une première cavité.

La pièce résultant de cette première injection est ensuite démoulée et transférée dans une deuxième cavité dont la forme contient le volume de la pièce finie telle qu'elle résultera des première et deuxième injections.

La deuxième injection est alors réalisée dans l'espace laissé disponible, dans la deuxième cavité, par la pièce résultant de la première injection.

Le procédé de moulage bi-injection par rétraction n'utilise quant à lui qu'une seule cavité, cette cavité étant en revanche de forme variable et définie dans un moule comprenant une empreinte 51, un noyau fixe 53, et au moins un noyau mobile 52 (figures 2 et 3).

Dans un tel agencement, la forme de la cavité est donc déterminée par la position du noyau mobile 52.

Plus précisément, un moule utilisable pour réaliser l'invention comprend typiquement un noyau fixe 53 occupant une position centrale et un noyau mobile 52 présentant une forme annulaire, entourant le noyau fixe 53, et monté coulissant de façon étanche par rapport à ce noyau fixe 53.

Par ailleurs, le noyau mobile 52 est conçu pour pouvoir adopter une première position, illustrée à la figure 2, dans laquelle ce noyau mobile s'appuie de façon étanche sur une surface frontale 510 de l'empreinte 51.

Dans cette première position du noyau mobile 52, l'empreinte 51, le noyau mobile 52, et le noyau fixe 53 délimitent ensemble un premier volume creux dans lequel est injecté le premier polymère P1 (figue 2) pour constituer au moins la paroi dressée 3 du contenant, et de préférence également le fond 2 dans la même opération d'injection.

Cependant, comme le montre encore la figure 2, l'empreinte 51 et le noyau mobile 52 sont, dans la première position de ce noyau mobile, radialement séparés l'un de l'autre, à l'extérieur de la zone dans laquelle le noyau mobile 52 s'appuie sur la surface frontale 510 de l'empreinte 51, par un volume annulaire vide W.

Juste après l'injection du polymère P1 dans le moule configuré comme illustré à la figure 2, le noyau mobile 52 est éloigné de la surface frontale 510 de l'empreinte 51, de manière à adopter la deuxième position illustrée à la figure 3, et à définir un deuxième volume creux incluant le volume vide W, isolant totalement le noyau mobile 52 du premier polymère P1, et dans lequel est injecté le deuxième polymère P2.

En réalité, la figure 3 n'illustre qu'une situation purement théorique qui ne pourrait être obtenue que par injection du deuxième polymère P2 à très basse vitesse, après refroidissement et solidification définitive du premier polymère, alors que l'injection du deuxième polymère P2, immédiatement après injection du premier polymère P1, modifie la forme de la partie préalablement moulée dans ce premier polymère.

Plus précisément, et pour autant que la face externe 41 du rebord 4 se raccorde à la paroi 3 en formant avec cette paroi un angle A au plus égal à 150 degrés, le deuxième polymère P2 pénètre dans le premier polymère P1 dans une zone de raccordement R dans laquelle le rebord 4 se raccorde à la paroi 3, cette pénétration ayant pour effet de développer une force de liaison très importante entre la paroi 3 et le rebord 4.

Dans la zone de raccordement R, le deuxième polymère P2 peut typiquement présenter une épaisseur égale, à plus ou moins 10% près, à l'épaisseur moyenne du rebord 4.

Dans la mesure où, après le retrait du noyau mobile 52 à distance de la surface frontale 510 de l'empreinte 51 (figure 3), le noyau mobile 52 n'est plus en contact avec le premier polymère, la face interne 42 du rebord 4 se raccorde à la paroi 3 en formant une couche 43 (figure 4) qui recouvre la paroi 3 sur la partie au moins de cette paroi 3 qui est comprise entre la zone de raccordement R et le bord 30 de cette même paroi 3.

Bien que la couche 43, qui peut se terminer par un bourrelet 44, n'apporte par elle-même qu'une force de liaison relativement modeste par rapport à celle que crée la pénétration du deuxième polymère P2 dans le premier polymère P1, la présence de cette couche 43 atteste que, dans sa deuxième position (figure 3), le noyau mobile 52 est écarté du premier polymère P1, cet agencement favorisant la pénétration du deuxième polymère P2 dans le premier polymère P1.

Dans une autre solution de l'invention, le rebord (4) se raccorde à la paroi (3) le long du bord (30).

Selon les figures 5 et 6, l'éventation est assurée en Y, ce qui peut conduire à une bavure 6 éventuelle invisible à l'extérieur du contenant.

## Revendications

1. Contenant (1) moulé par bi-injection comprenant un fond (2) s'étendant dans un plan principal (Q) et une paroi dressée (3) de forme évasée se raccordant au fond (2) et s'étendant, suivant une direction (Z) perpendiculaire au plan principal (Q), jusqu'à un bord continu (30) séparé du fond (2) par une distance maximale (D), la paroi (3) au moins étant réalisée par moulage dans un premier polymère thermoplastique (P1), le contenant moulé (1) comprenant en outre un rebord (4) s'étendant radialement autour du bord (30), et ce rebord (4) se raccorde à la paroi (3) à plus grande proximité du bord (30) que du fond (2) et, ce rebord (4) s'élevant jusqu'à atteindre, par rapport au fond (2), une hauteur (H) supérieure à la distance maximale (D), le rebord (4) étant réalisé dans un deuxième polymère thermoplastique (P2) se distinguant du premier polymère (P1) au moins par sa couleur, le contenant moulé (1) étant **caractérisé en ce qu'**il est réalisé par un moulage bi-injection par rétraction utilisant une seule cavité de forme variable et définie dans un moule comprenant une empreinte (51), un noyau fixe (53), et au moins un noyau mobile (52) et que la paroi (3) et le rebord (4) présentent une épaisseur moyenne égale, à plus ou moins 25% près, à 0,5 + (0,065 x V) millimètres, où V est le volume du contenant exprimé en litres.

2. Contenant suivant la revendication 1, **caractérisé en ce que** le rebord (4) présente une face externe (41) se raccordant à la paroi (3) en formant avec cette paroi un angle (A) au plus égal à 150 degrés, et **en ce que** le deuxième polymère (P2) pénètre dans le premier polymère (P1) dans une zone de raccordement (R) dans laquelle le rebord (4) se raccorde à la paroi (3).

3. Contenant suivant la revendication 2, **caractérisé en ce que**, dans la zone de raccordement (R), le deuxième polymère (P2) présente une épaisseur égale, à plus ou moins 10% près, à l'épaisseur moyenne du rebord (4).

4. Contenant suivant l'une quelconque des revendications 2 et 3, **caractérisé en ce que** le rebord (4) présente une face interne (42) se raccordant à la paroi (3) en formant une couche (43) recouvrant la paroi (3) sur une partie au moins de cette paroi (3) comprise entre la zone de raccordement (R) et le bord (30) de la paroi (3).

5. Contenant suivant la revendication 2, **caractérisé en ce que** le rebord (4) se raccorde à la paroi (3) le long du bord (30).

6. Contenant suivant l'une quelconque des revendications précédentes, **caractérisé en ce que** chacun des premier et deuxième polymères (P1, P2) est teinté dans la masse, et **en ce que** l'un au moins des premier et deuxième polymères (P1, P2) contient du polypropylène en tant que constituant d'un mélange ou en tant que copolymère.

## Patentansprüche

1. Behälter (1), der durch Doppeleinspritzung gegossen wird und einen Boden (2), der sich in einer Hauptebene (Q) erstreckt, und eine hochgezogene Wand (3) mit erweiterter Form, die mit dem Boden (2) verbunden ist und sich längs einer Richtung (Z) senkrecht zu der Hauptebene (Q) bis zu einer ununterbrochenen Kante (30) erstreckt, die von dem Boden (2) um eine maximale Strecke (D) beabstandet ist, umfasst, wobei der Boden (3) wenigstens durch Gießen in einem ersten thermoplastischen Polymer (P1) verwirklicht ist, wobei der gegossene Behälter (1) außerdem einen Rand (4) umfasst, der sich um die Kante (30) radial erstreckt, wobei dieser Rand (4) mit der Wand (3) näher bei der Kante (30) als bei dem Boden (2) verbunden ist und wobei dieser Rand (4) nach oben verläuft, bis er in Bezug auf den Boden (2) eine Höhe (H) erreicht, die größer ist als die maximale Strecke (D), wobei der Rand (4) in einem zweiten thermoplastischen Polymer (P2) verwirklicht ist, das sich von dem ersten Polymer (P1) wenigstens durch seine Farbe unterscheidet, wobei der gegossene Behälter (1) **dadurch gekennzeichnet ist, dass** er durch einen Doppeleinspritzguss durch Zusammenziehen unter Verwendung eines einzigen Hohlraums mit veränderlicher Form, der in einer Gießform definiert ist, die einen Formhohlraum (51), einen festen Kern (53) und wenigstens einen beweglichen Kern (52) umfasst, verwirklicht ist und dass die Wand (3) und der Rand (4) eine mittlere Dicke aufweisen, die bis auf 25 % mehr oder weniger gleich 0,5 + (0,065 × V) Millimeter beträgt, wobei V das Volumen des Behälters ausgedrückt in Litern ist.

2. Behälter nach Anspruch 1, **dadurch gekennzeichnet, dass** der Rand (4) eine äußere Fläche (41) aufweist, die mit der Wand (3) verbunden ist, indem sie mit dieser Wand einen Winkel (A) bildet, der höchstens gleich 150 Grad ist, und dass das zweite Polymer (P2) in das erste Polymer (P1) in einer Verbindungszone (R) eindringt, in der der Rand (4) mit der Wand (3) verbunden ist.

3. Behälter nach Anspruch 2, **dadurch gekennzeichnet, dass** in der Verbindungszone (R) das zweite Polymer (P2) eine Dicke aufweist, die bis auf 10 % mehr oder weniger gleich der mittleren Dicke des Randes (4) ist.

4. Behälter nach einem der Ansprüche 2 und 3, **dadurch gekennzeichnet, dass** der Rand (4) eine innere Fläche (42) aufweist, die mit der Wand (3) verbunden ist, indem sie eine Schicht (43) bildet, die die Wand (3) wenigstens auf einem Teil dieser Wand (3), der zwischen der Verbindungszone (R) und der Kante (30) der Wand (3) enthalten ist, abdeckt.

5. Behälter nach Anspruch 2, **dadurch gekennzeichnet, dass** der Rand (4) mit der Wand (3) längs der Kante (30) verbunden ist.

6. Behälter nach einem der vorhergehenden Ansprüche, **dadurch gekennzeichnet, dass** sowohl das erste als auch das zweite Polymer (P1, P2) in der Masse gefärbt ist und dass das erste und/oder das zweite Polymer (P1, P2) Polypropylen als Konstituent eines Gemisches oder als Copolymer enthält.

## Claims

1. Container (1) moulded by bi-injection moulding, comprising a bottom (2) that extends in a main plane (Q) and an upright wall (3) having a flared shape that is connected to the bottom (2) and extends, in a direction (Z) perpendicular to the main plane (Q), as far as a continuous edge (30) that is separated from the bottom (2) by a maximum distance (D), the wall (3) at least being produced by moulding from a first thermoplastic polymer (P1), the moulded container (1) also comprising a lip (4) that extends radially around the edge (30), this lip (4) being connected to the wall (3) in greater proximity to the edge (30) than to the bottom (2) and this lip (4) rising so as to reach, with respect to the bottom (2), a height (H) greater than the maximum distance (D), the lip (4) being produced from a second thermoplastic polymer (P2) which differs from the first polymer (P1) at least by way of its colour, the moulded container (1) being **characterized in that** it is produced by bi-injection moulding by retraction using a single cavity of variable shape that is defined in a mould comprising an impression (51), a fixed core (53) and at least one mobile core (52), and **in that** the wall (3) and the lip (4) have an average thickness equal, plus or minus 25%, to 0.5 + (0.065 x V) millimetres, where V is the volume of the container in litres.

2. Container according to Claim 1, **characterized in that** the lip (4) has an outer face (41) that is connected to the wall (3), forming an angle (A) at most equal to 150 degrees with this wall, and **in that** the second polymer (P2) penetrates into the first polymer (P1) in a connection zone (R) in which the lip (4) is connected to the wall (3).

3. Container according to Claim 2, **characterized in that**, in the connection zone (R), the second polymer (P2) has a thickness equal, plus or minus 10%, to the average thickness of the lip (4).

4. Container according to either of Claims 2 and 3, **characterized in that** the lip (4) has an inner face (42) that is connected to the wall (3), forming a layer (43) that covers the wall (3) over at least a part of this wall (3), said part extending between the connection zone (R) and the edge (30) of the wall (3).

5. Container according to Claim 2, **characterized in that** the lip (4) is connected to the wall (3) along the edge (30).

6. Container according to any one of the preceding claims, **characterized in that** each of the first and second polymers (P1, P2) is mass-coloured, and **in that** at least one of the first and second polymers (P1, P2) contains polypropylene as part of a mixture or as a copolymer.
